# EUROPÄISCHE PATENTSCHRIFT

(11) **EP 1 633 600 B1**
(45) Veröffentlichungstag und Bekanntmachung des Hinweises auf die Patenterteilung: **20.12.2006**
(21) Anmeldenummer: 04738637.0
(22) Anmeldetag: 09.06.2004
(51) Int. Cl.: B60R 1/06, B60R 1/12

(54) **SPIEGELGLASBAUGRUPPE MIT INTEGRIERTEN LEUCHTMITTELN**
MIRROR GLASS COMPONENT WITH INTEGRATED ILLUMINATING MEANS
MODULE VERRE A GLACE COMPORTANT DES ELEMENTS LUMINESCENTS INTEGRES

(30) Priorität: 13.06.2003 DE 10327072
(43) Veröffentlichungstag der Anmeldung: 15.03.2006
(73) Patentinhaber: Schefenacker Vision Systems Germany GmbH, 73730 Esslingen (DE)
(72) Erfinder: OEHMANN, Roland, 70188 Stuttgart (DE)
(74) Vertreter: Schmid, Rudolf
(86) Internationale Anmeldenummer: PCT/DE2004/001185
(87) Internationale Veröffentlichungsnummer: WO 2004/113123

(56) Entgegenhaltungen:
- US-A1- 2003 067 783
- US-B1- 6 476 358

## Beschreibung

Die Erfindung betrifft ein Fahrzeugaußenspiegelmodul mit einer beheizbaren Spiegelglasbaugruppe, wobei die Spiegelglasbaugruppe mindestens ein Spiegelglas und eine mindestens einlagige auf dessen Rückseite angeordnete flexible, folienartige mit Stromanschlussstellen versehene Heizfolie aufweist, siehe US-B-6 476 358.

Aus der DE 20 34 741 OS ist ein Außenspiegel bekannt, bei dem hinter dem Spiegelglas eine Kunststofffolie angeordnet ist, auf der ein mäanderförmig verlegtes Heizelement aufgebracht ist. Das Heizelement ist beispielsweise ein Heizdraht oder eine aufgedampfte, aufgedruckte oder galvanisch aufgebrachte streifenförmige Metallschicht.

Des Weiteren ist aus der DE 199 59 609 A1 ein Außenrückspiegel bekannt, in dessen Gehäuse mehrere Leuchtmittel in Form von Lumineszenzdioden angeordnet sind.

Werden nun in einem Fahrzeugaußenspiegelmodul eine Heizfolie und zusätzliche Leuchtmittel verwendet, so werden beide separat elektrisch am Fahrzeugbordnetz angeschlossen.

Der vorliegenden Erfindung liegt daher die Problemstellung zugrunde ein Fahrzeugaußenspiegelmodul zu entwickeln, in dem eine Spiegelheizung und mindestens ein Leuchtmittel so integriert und angeschlossen sind, dass diese bei geringem Verkabelungsaufwand einfach und sicher montiert werden können.

Diese Problemstellung wird mit den Merkmalen des Hauptanspruches gelöst. Dazu ist auf oder in der mindestens ein Heizelement aufnehmenden Heizfolie mindestens ein Leuchtmittel und mindestens eine weitere Stromanschlussstelle angeordnet oder integriert. Auf oder in der Heizfolie sind zwischen dem oder den Leuchtmitteln und der oder den weiteren Stromanschlussstellen diese kontaktierende stromführende Leiterbahnen angeordnet oder integriert. Jedes Leuchtmittel hat mindestens eine Hauptlichtaustrittsfläche, deren Flächenschwerpunkt vor der Spiegelrückseite liegt.

Die im Außenspiegelmodul eingebauten Leuchtmittel sind in der Regel Lumineszenzdioden. Sie können aber auch Leuchtfolien, Leuchtstäbe, Gaslampen, Glühlampen und dergleichen sein. Diese Leuchtmittel werden neben ihrer Verdrahtung auf der Heizfolie zusätzlich zum Heizelement angeordnet. Die Heizfolien werden nach dem Aufbringen der Heiz- und Leiterbahnen mit den Leuchtmitteln und ggf. mit Anschlusselementen bestückt. Die bestückte Heizfolie wird dann z.B. durch Verkleben mit dem Spiegelglas und einem Spiegelglasträger zu einer Spiegelglasbaugruppe vereint.

Bei einer Spiegelglasbaugruppe, bei der der Rand des Spiegelglases von einem Spiegelglasrahmen umgeben ist, kommen die an der Heizfolie fixierten Leuchtmittel in der Regel ohne separate Halterung im Hohlraum des Spiegelglasrahmens zur Anlage. An den Stellen des Rahmens, an denen Leuchtmittel untergebracht sind, hat der Rahmen einzelne Öffnungen oder transparente Stellen, durch die das von den Leuchtmitteln ausgesandte Licht austritt.

Durch Einlegen und Verkleben der meist dünnen Heizfolie werden auf einfache Weise die Leuchtmittel zusammen mit der Spiegelheizung montiert. Da die Heizung und die Leuchtmittel beispielsweise eine gemeinsame Anschlussleiste oder einen gemeinsamen Stecker aufweisen, wird der Anschluss des Außenspiegelmoduls am Fahrzeug zusätzlich vereinfacht.

Weitere Einzelheiten der Erfindung ergeben sich aus den Unteransprüchen und der nachfolgenden Beschreibung mehrerer schematisch dargestellter Ausführungsbeispiele.
- Figur 1:: Fahrzeugaußenspiegelmodul von der Spiegelseite aus betrachtet;
- Figur 2:: Teilschnitt durch das Fahrzeugaußenspiegelmodul;
- Figur 3:: Teilschnitt mit nach außen leuchtender Diode;
- Figur 4:: Teilschnitt mit nach innen leuchtender Diode;
- Figur 5:: Diode mit Lichtleiter;
- Figur 6:: Leuchtrichtungen verschiedener Diodenanordnungen;
- Figur 7:: Folie mit zu den Dioden führenden Leiterbahnen;
- Figur 8:: Heizfolie mit zu den Dioden führenden Leiterbahnen;
- Figur 9:: Diodenvorwiderstand aus Widerstandsdraht.

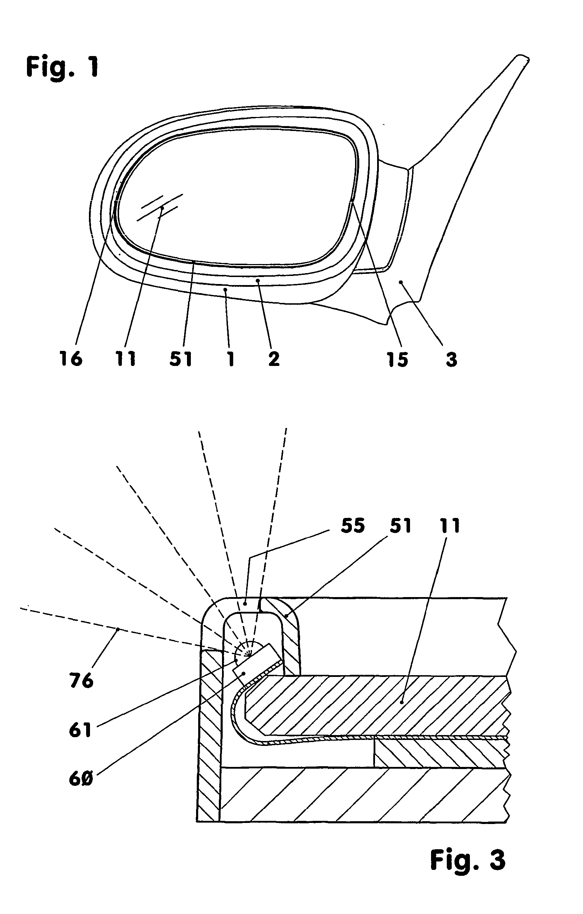

Die Figur 1 zeigt ein Fahrzeugaußenspiegelmodul, das u.a. aus einem Spiegelgehäuse (1), einem Spiegelglas (11), und einer Spiegelfußabdeckung (3) eines nicht dargestellten Spiegelfusses besteht.

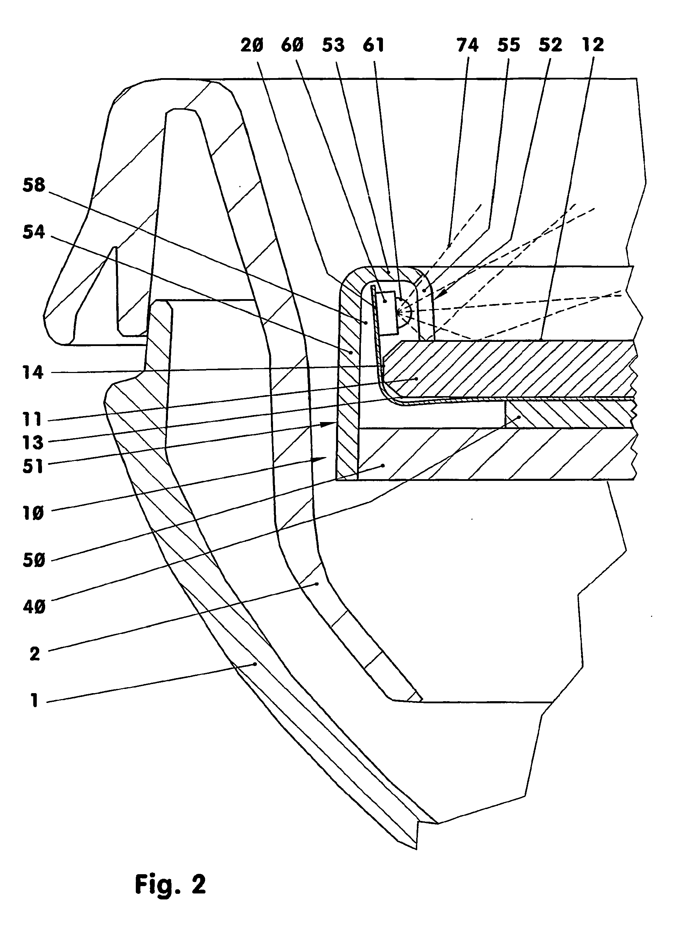

In der Figur 2 ist ein quer zum Spiegelglas (11) orientierter Teilschnitt dargestellt. Hier ist ein Spiegelglasmodul (10) seitlich und auf der Rückseite vom Spiegelgehäuse (1) und der mit diesem verrasteten oder verklebten Einfassung (2) umgeben. Das Spiegelglasmodul (10) ist im Gehäuse (1) in der Regel verstellbar gelagert. Dazu sitzt dieses Spiegelglasmodul (10) mit Spiel innerhalb der Einfassung (2).

Das Spiegelglasmodul (10) umfasst nach Figur 2 einen Spiegelglasträger (50), eine Klebefolie (40), eine Heizfolie (20) mit einer Diode (60) oder eine Gruppe von Dioden und einen Spiegelglasrahmen (51). Auf dem Spiegelglasträger (50) ist das Spiegelglas (11) mittels einer Klebefolie (40) und einer ebenfalls klebenden Heizfolie (20) befestigt. Die Klebefolie (40) ist beispielsweise ein beidseitig mit einer Klebstoffschicht ausgestatteter Moosgummi oder ein anderer dünnwandiger Elastomerkörper. Bei der Montage wird die Heizfolie (20) mit ihrer Klebeschicht auf der Rückseite (13) des Spiegelglases (11) aufgeklebt. Auf die Heizfolie (20) wiederum wird die Klebefolie (40) aufgetragen, um so das Spiegelglas (11) mit dem Spiegelglasträger (50) zu verbinden. U.a. zur mechanischen Sicherung des Spiegelglases (11) am Spiegelglasträger (50) umgibt der Spiegelglasrahmen (51) den Spiegelglasträger (50). Dazu hat der Rahmen (51) einen Außenrandabschnitt (54), der an der Außenkontur des Spiegelglasträgers (50) anliegt und nach vorn über die Spiegelglasaußenseite (12) übersteht. Der Außenrandabschnitt (54) schließt mit der Spiegelglasaußenseite (12) eine Winkel kleiner oder gleich 90 Winkelgrade ein. Ein bis drei Millimeter vor der Spiegelglasaußenseite (12) geht der Rahmen (51) in einen Abschnitt (53) über, der parallel zur Spiegelglasaußenseite (12) orientiert ist. Dieser beispielsweise wenige Millimeter breite Abschnitt (53) erstreckt sich in einen Innenrandabschnitt (52) der unter ca. 90 Winkelgrade an der Spiegelglasaußenseite (12) zur Anlage kommt.

Der Spiegelglasrahmen (51) und der Spiegelglasträger (50) sind z.B. miteinander unlösbar verschweißt oder verklebt.

Da die Fläche des Spiegelglases (11) kleiner ist als die des Spiegelglasträgers (50), umschließen der Spiegelglasträger (50), der Spiegelglasrahmen (51) und das Spiegelglas (11) einen Hohlraum (58). In diesem Hohlraum (58) befindet sich ein Teilbereich (24) der Heizfolie (20). Letzterer steht beispielsweise - um ca. 90 Winkelgrade abgewinkelt - über die Spiegelglasaußenseite (12) über. In dem überstehenden Bereich ist auf der der Spiegelrückseite (13) zugewandeten Seite (21) der Heizfolie (20) z.B. eine Reihe von mehreren - senkrecht zur Zeichnungsebene hintereinander liegende - Leuchtdioden (60) angeordnet.

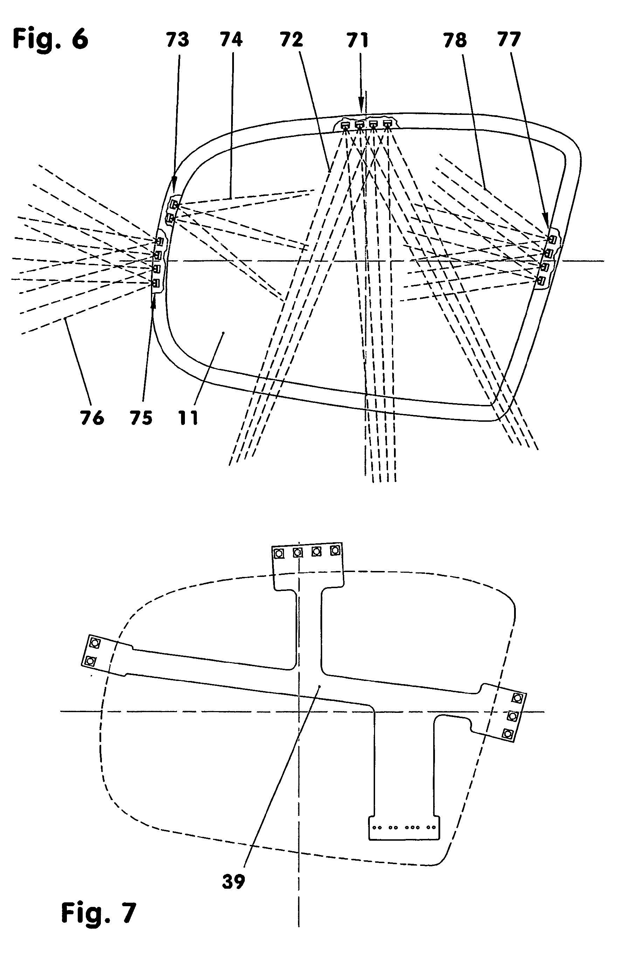

Vor der Hauptlichtaustrittsöffnung (61) der Leuchtdioden (60) befindet sich im Spiegelglasrahmen (51) eine fensterartige Öffnung (55). Durch diese Öffnung (55), die sich im Bereich des Innenrandabschnittes (52) von der Spiegelglasaußenseite (12) bis zum spiegelglasparallelen Abschnitt (53) des Rahmens (51) erstreckt, strahlen die Leuchtmittel (60) annähernd parallel zum Spiegelglas (11) in Richtung des Fahrzeuglenkers. Der maximale Öffnungswinkel der ausgesandten Strahlen (74) beträgt z.B. 90 Winkelgrade. Die derart angeordneten Leuchtdioden (60) haben beispielsweise die Funktion einer Totwinkelanzeige, die den Fahrer - in Kombination mit einer die rückwärtige Fahrbahnzone des Fahrzeugs überwachenden Sensorik - vor sich im Totwinkelbereich anbahnenden Gefahrensituationen warnen. In der Figur 6 sind z.B. zwei solcher Dioden als Diodengruppe (73) dargestellt.

Durch die tiefliegende, verdeckte Anordnung der Dioden (60) im Spiegelglasrahmen (51) innerhalb der Einfassung (2) ist die Signalwirkung der Leuchtmittel (60) auch bei hellem Sonnenlicht noch gut erfassbar. Zudem werden andere Verkehrsteilnehmer nicht irritiert.

Die Dioden (60) können auch zur Diodengruppe (71) gehören, vgl. Figur 6, die als Ausstiegshilfe bzw. Umfeldleuchte z.B. beim nächtlichen Öffnen der Fahrer- oder Beifahrertür aktiviert werden. Hierbei wird das abgestrahlte Licht (72) durch eine teilweise Reflektion am Spiegelglas (11) zusätzlich verstärkt.

Die Dioden (60) werden im Hohlraum (58) ausschließlich durch die Heizfolie (20, 24) positioniert und gehalten. Da der obere Bereich des Hohlraums (58) weiter ist als die Engstelle zwischen dem Spiegelglasrand (14) und dem Spiegelglasrahmen (51) können die Dioden (60) nicht unter das Spiegelglas (11) rutschen.

Es besteht auch die Möglichkeit die Dioden (60) oder ein Block aus mehreren Dioden so zu formen, dass diese sich passgenau in die Öffnung (55) einfügen. Die so verschlossene Öffnung verhindert das Eindringen von Schutz und Feuchtigkeit in den Rahmen (51). Ggf. haben die Dioden zur Abdichtung bereichsweise eine elastische Dichtkontur.

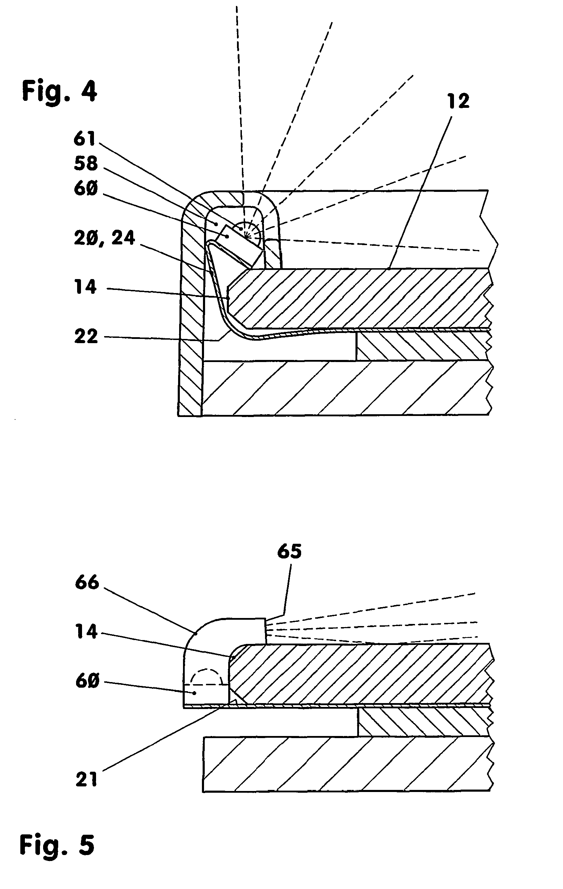

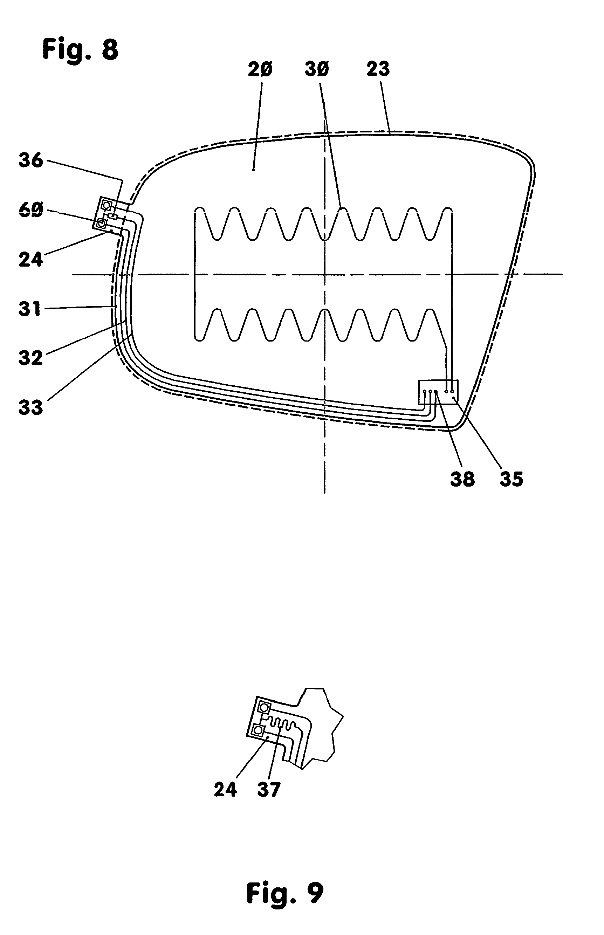

In Figur 3 ist eine Spiegelglasbaugruppe (10) gezeigt, bei der die Diode (60) oder eine Diodengruppe auf der Unterseite (22) der Heizfolie (20) angeordnet ist. Das diodentragende Ende der Heizfolie (20, 24) umgreift dabei den Spiegelrand (14) nahezu vollständig. Die beispielsweise zum Spiegelglas (11) hin orientierten Leiterbahnen (31-33), vgl. Figur 8, sind für den elektrischen Anschluss der Dioden in deren Bereichen auf die andere Heizfolienseite (21) durchkontaktiert. Die Hauptlichtaustrittsfläche (61) der dargestellte Diode (60) weist unter ca. 45 Winkelgraden vom Spiegelglas (11) weg. Unmittelbar vor ihr befindet sich eine Öffnung (55), die sich im Rahmen (51) zum Teil im Abschnitt (53) und im Abschnitt (54) befindet. Die Dioden (60) strahlen im Mittel unter ca. 45 Winkelgraden von der zur Spiegelglasoberfläche (12) normalen Mittellinie zum Spiegelrand (14) hin weg. Der maximale Öffnungswinkel der Strahlen (76) beträgt z.B. 90 Winkelgrade. Auch diese Dioden (60) haben z.B. die Funktion von Totwinkelleuchten, die vom innenliegenden, äußeren Spiegelrandbereich (15) aus den Fahrer warnen können. Ggf. können sie auch als Positionslicht oder Blinklicht am außenliegenden Spiegelrandbereich (16) angeordnet sein, vgl. die Diodengruppe (75) aus Figur 6.

Figur 4 zeigt den Randbereich einer Spiegelglasbaugruppe mit Dioden (60) die im Mittel unter einem Winkel von 45 Winkelgraden gegenüber der Spiegelglasaußenseite (12) vom Spiegelrand (14) zur Spiegelmitte hin abstrahlen. Auch hier sind die Dioden (60) auf der Unterseite (22) der Heizfolie (20, 24) befestigt. Die Heizfolie (20, 24) ist entgegen der Verlegungsart aus Figur 3 weiter in den Hohlraum (58) hinein verlängert und dort um beispielsweise 135 Winkelgrade umgefalzt, so dass die Dioden (60) mit ihrer Hauptlichtaustrittsöffnung (61) zur Spiegelmitte hin gewandt sind. Durch das zusätzliche Umfalzen der Heizfolie (24) werden die Dioden (60) aufgrund der Folienelastizität spielfrei fixiert.

Die Verwendung dieser Leuchtdioden (60) ist vergleichbar mit der Verwendung der zu Figur 2 beschriebenen Dioden.

Die in den Figuren 2 bis 4 dargestellten Spiegelglasbaugruppen (10) haben einen lichtundurchlässigen Spiegelglasrahmen (51) mit vor den Dioden (60) liegenden Öffnungen (55). Anstelle der Öffnungen (55) kann der Spiegelglasrahmen (51) vor den Hauptlichtaustrittsöffnungen (61) der Dioden (60) auch transparent - glasklar oder farbig - ausgeführt sein. Alternativ zu den transparenten Stellen kann der Rahmen (51) partiell auch durchscheinend gestaltet werden, wobei der Rahmen im Bereich der Dioden (60) seine Rahmenfarbe nicht ändert.

Nach Figur 5 wird der Oberseite (21) der Heizfolie (20), die nicht um den Spiegelrand (14) herumgeführt wird, eine Lumineszenzdiode (60) mit einem beispielsweise angeformten oder aufgeklebten Lichtleiter (64) angeordnet. Der Lichtleiter (64) umgreift im Ausführungsbeispiel den Spiegelrand (14) derart, dass seine Hauptlichtaustrittsöffnung (65) ein Abstrahlverhalten hat, das weitgehend dem der Dioden aus Figur 2 entspricht. Ggf. ist die außerhalb der Hauptlichtaustrittsfläche (65) gelegene Lichtleiteroberfläche (66) zur besseren Lichtleitung und zur Vermeidung von Falschlicht verspiegelt oder verchromt.

Anstelle des Spiegelglasrahmens (51) werden das Spiegelglas (11) und der Spiegelglasträger (50) mittels mehrerer - nicht dargestellter Klammern zusammengehalten.

Für die Lichtleiter (64) können im Spiegelrand (14) Aussparungen angeordnet sein, so dass die montierten Lichtleiter oder Leuchtdioden nicht radial über den Spiegelrand (14) überstehen.

Alternativ kann der gesamte Hohlraum (58) abschnittsweise als Lichtleiter ausgespritzt sein.

Figur 8 zeigt eine Heizfolie (20) mit einer Heizbahn (30), zwei Dioden (60), einem Vorwiderstand (36), drei Leiterbahnen (31-33) und einem Anschlussstecker (35). Die Heizfolie (20) hat eine Wandstärke von ca. 0,15 bis 0,3 Millimeter. Die Heizbahn (30) befindet sich mit zwei mäanderförmig verlegten Abschnitten im mittleren Bereich des Spiegels. Die Heizbahn (30) endet auf der Spiegelrückseite im rechten, unteren Bereich im Anschlussstecker (35). Anstelle eines Anschlusssteckers (35) können die Leiterbahnen (31-33) und die Heizbahn (30) auch in einzelnen Kontaktfahnen enden, denen dann im Fahrzeugaußenspiegelmodul über federnde Kontaktbügel im Bedarfsfall Strom zugeführt wird.

Die Heizbahn (30) hat am linken Rand den überstehenden Lappen (24) auf dem die Dioden (60) und der Vorwiderstand (36) befestigt sind, vgl. auch Figur 2 und 6. In einigen Fällen wird dort auch eine Schutzdiode platziert. Die beiden Dioden (60) sind beispielsweise zur Einzelansteuerung über die drei Leiterbahnen (31-33) mit dem Anschlussstecker (35) verbunden. Die Leiterbahnen (31-33) verlaufen weitgehend parallel zum Rand (23) der Heizfolie (20). Die Leiterbahnen (31-33) sind hier auf der Heizfolie (20) auf der Seite aufgetragen, auf der auch die Heizbahn (30) angeordnet ist. Werden mehrere Diodengruppen (71, 73, 75, 77) an der Heizfolie (20) angeschlossen, kann zumindest ein Teil der Leiterbahnen auf der Seite der Heizfolie (20) aufgebracht werden, auf der nicht die Heizbahn (30) liegt. Ggf. können die Leiterbahnen auch auf einer separaten Leiterbahnfolie (39) angeordnet werden, vgl. Figur 7, wobei diese Folie (39) dann zumindest im Anschlusssteckerbereich mit der Heizfolie (30) verbunden ist.

Selbstverständlich besteht auch die Möglichkeit, die einzelnen Leiterbahnen und Heizbahnen in verschiedenen, elektrisch isolierten Ebenen einer mehrschichtigen Heizfolie unterzubringen. Ferner kann die Heizfolie (20) zumindest in den Randbereichen bzw. im Lappenbereich ein- oder zweiseitig mit einer elastischen, isolierenden Schutzschicht überzogen sein.

In Figur 9 ist der Lappen (24) vergrößert dargestellt. Als Ersatz für den aufgelöteten, diskreten Widerstand (36) z.B. in SMD-Technik wird ein mäanderförmig verlegter Drahtwiderstand (37) als Teil der entsprechenden Leiterbahn (32) verwendet.

Zusätzlich können auf der Heizfolie (20), z.B. in Randbereichen, Teile der elektronischen Steuerung der Spiegelverstellantriebe angeordnet werden. Ggf. kann die Heizfolie zur Aufnahme diskreter Elektronikbauteile, wie IC's, bereichsweise verstärkt werden.

### Bezugszeichenliste:

- 1: Spiegelgehäuse, Fahrzeugaußenspiegelgehäuse
- 2: Einfassung
- 3: Spiegelfußabdeckung

- 10: Spiegelglasbaugruppe
- 11: Spiegelglas
- 12: Spiegelglasaußenseite, unverspiegelt
- 13: Spiegelrückseite, verspiegelt
- 14: Spiegelrand
- 15: Spiegelrandbereich, dem Fahrer zugewandt
- 16: Spiegelrandbereich, vom Fahrer abgewandt

- 20: Heizfolie
- 21: Heizfolienseite, zum Spiegelglas hin orientiert
- 22: Heizfolienseite, dem Spiegelglas abgewandt, Unterseite
- 23: Heizfolienrand
- 24: Lappen, Teilbereich

- 30: Heizbahn, Heizelement
- 31-33: Leiterbahnen
- 35: Anschlussstecker, Stromanschlussstelle
- 36: Vorwiderstand, konventionell
- 37: Drahtwiderstand, mäanderförmig
- 38: Stromanschlussstelle
- 39: Leiterbahnfolie

- 40: Klebefolie

- 50: Spiegelglasträger
- 51: Spiegelglasrahmen
- 52: Innenrandabschnitt
- 53: Abschnitt parallel zur Spiegelglasaußenseite
- 54: Außenrandabschnitt
- 55: Öffnung, Rahmenfenster
- 58: Hohlraum

- 60: Leuchtmittel, Lumineszenzdiode
- 61: Hauptlichtaustrittsfläche

- 64: Lichtleiter
- 65: Hauptlichtaustrittsfläche
- 66: Lichtleiteroberfläche

- 71: Leuchtmittelgruppe, Diodengruppe, oben
- 72: Lichtstrahlen zu (71)
- 73: Leuchtmittelgruppe, Innenrand, innen
- 74: Lichtstrahlen zu (73)
- 75: Leuchtmittelgruppe, Außenrand, außen
- 76: Lichtstrahlen zu (75)
- 77: Leuchtmittelgruppe, Innenrand, innen
- 78: Lichtstrahlen zu (77)

## Patentansprüche

1. Fahrzeuaaußenspiegelmodul mit einer beheizbaren Spiegelglasbaugruppe, wobei die Spiegelglasbaugruppe (10) mindestens ein Spiegelglas (11) und eine mindestens einlagige auf dessen Rückseite angeordnete flexible, folienartige mit Stromanschlussstellen (35) versehene - zumindest ein Heizelement aufnehmende - Heizfolie (20) aufweist,
**dadurch gekennzeichnet,**
- **dass** auf oder in der Heizfolie (20) mindestens ein Leuchtmittel (60) und mindestens eine weitere Stromanschlussstelle (38) angeordnet oder integriert ist,
- **dass** auf oder in der Heizfolie (20) zwischen dem oder den Leuchtmitteln (60) und der oder den weiteren Stromanschlussstellen (38) diese kontaktierende stromführende Leiterbahnen (31-33) angeordnet oder integriert sind,
- **dass** jedes Leuchtmittel (60) mindestens eine Hauptlichtaustrittsfläche (61, 65) hat, deren Flächenschwerpunkt vor der Spiegelrückseite (13) liegt.

2. Fahrzeugaußenspiegelmodul gemäß Anspruch 1, **dadurch gekennzeichnet, dass** die Heizfolie (20) über das Spiegelglas (11) überstehende Laschen (24) zur Aufnahme der Leuchtmittel (60) hat.

3. Fahrzeugaußenspiegelmodul gemäß Anspruch 2, **dadurch gekennzeichnet, dass** die Laschen (24) mindestens so lang sind, dass sie über die Spiegelglasvorderseite (12) um mindestens eine Querausdehnung einer Leuchtdiode (60) überstehen.

4. Fahrzeugaußenspiegelmodul gemäß Anspruch 1, **dadurch gekennzeichnet, dass** das Spiegelglas (11) zwischen einem Spiegelglasträger (50) und einem daran befestigten das Spiegelglas (11) an dessen Vorderseite (12) umgreifenden Spiegelglasrahmen (51) eingespannt ist.

5. Fahrzeugaußenspiegelmodul gemäß Anspruch 4, **dadurch gekennzeichnet, dass** der Spiegelglasrahmen (51) einen ringförmigen, entlang des Spiegelrandes (14) entlangführenden Hohlraum (58) aufweist.

6. Fahrzeugaußenspiegelmodul gemäß Anspruch 5, **dadurch gekennzeichnet, dass** die mit den Leuchtmitteln (60) bestückten Laschen (24) der Heizfolie (20) in dem Hohlraum (58) mit Spiel oder passgenau angeordnet sind.

7. Fahrzeugaußenspiegelmodul gemäß Anspruch 1, **dadurch gekennzeichnet, dass** die Leiterbahnen (31-33) auf der Seite der Heizfolie (20) angeordnet sind, auf der auch das Heizelement (30) angeordnet ist.

8. Fahrzeugaußenspiegelmodul gemäß Anspruch 1, **dadurch gekennzeichnet, dass** zumindest ein Teil der zu den Leuchtmitteln (60) führenden Leiterbahnen (32) als Widerstandsdraht (37) ausgebildet ist.

9. Fahrzeugaußenspiegelmodul gemäß Anspruch 1, **dadurch gekennzeichnet, dass** das Leuchtmittel (60) eine Leuchtdiode oder eine Gruppe von Leuchtdioden ist, an die ein Lichtleiter (64) angeformt ist.

## Claims

1. Outside rear view mirror module with a heatable mirror plate sub-assembly, said mirror plate sub-assembly (10) being comprised of at least one mirror plate (11) and of a flexible, foil-type heating film (20) placed on the rear face of said mirror plate, whereby said film is at least single-layered and fitted with supply points (35) and can receive at least one heating element,
wherein
- at least one light device (60) and at least one further supply point (38) are placed or integrated on or in said heating film (20),
- live conductors (31-33) are placed or integrated on or in said heating film (20) between said light device or devices (60) and said further supply point or points (38), whereby said live conductors contact said further points or point,
- each light device (60) has at least one main light emerging surface (61, 65), whereby the centre of gravity of said light emerging surface is located in front of the mirror rear side (13).

2. The module of claim 1, wherein said heating film (20) has brackets (24) that protrude from said mirror plate (11) to receive said light devices (60).

3. The module of claim 2, wherein said brackets (24) are at least long enough to protrude over the mirror plate face (12) by at least the width of a light emitting diode (60).

4. The module of claim 1, wherein said mirror plate (11) is mounted between a mirror plate holder (50) and a mirror plate frame (51) that is affixed on said mirror plate holder and encompasses the face (12) of said mirror plate (11).

5. The module of claim 4, wherein said mirror plate frame (51) shows a ring-shaped hollow space (58) that runs along the edge (14) of said mirror.

6. The module of claim 5, wherein said brackets (24) of said heating film (20) that are fitted with said light devices (60) rest in said hollow space (58) with a certain clearance or are exactly fitted into it.

7. The module of claim 1, wherein said conductors (31-33) are placed on that side of said heating film (20) where the heating element (30) is also located.

8. The module of claim 1, wherein at least part of said conductors (32) leading to the light devices (60) consist of a resistance wire (37).

9. The module of claim 1, wherein said light device (60) is a light emitting diode or a group of light emitting diodes encompassed by a light guide (64) that is firmly bonded to said diode or group or diodes.

## Revendications

1. Module de rétroviseur extérieur automobile à bloc chauffable en verre réfléchissant, où le bloc en verre réfléchissant (10) comporte au moins un verre réfléchissant (11) et une feuille chauffante (20) placée sur sa face postérieure, ladite feuille étant flexible, au moins mono-couche, de type pelliculaire, équipée de connexions électriques et recevant au moins un élément chauffant,
**caractérisé en ce que**
- au moins un dispositif lumineux (60) et au moins une connexion électrique additionnelle (38) sont placés sur ou dans la feuille chauffante ou intégrés à celle-ci,
- des bandes conductrices de courant (31-33) sont placées sur ou dans la feuille chauffante (20) ou intégrées à celle-ci entre le ou les dispositif(s) lumineux (60) et la ou les connexion(s) électrique(s) additionnelles (38) et en contact avec ceux-ci,
- chaque dispositif lumineux (60) possède au moins une surface principale de sortie de la lumière (61, 65) dont le centre de gravité se trouve devant la face postérieure du rétroviseur (13).

2. Module de rétroviseur extérieur automobile selon la revendication 1, **caractérisé en ce que** ladite feuille chauffante (20) a des attaches (24) qui dépassent dudit verre réfléchissant (11) pour recevoir lesdits dispositifs lumineux (60).

3. Module de rétroviseur extérieur automobile selon la revendication 2, **caractérisé en ce que** lesdites attaches (24) sont au moins suffisamment longues qu'elles dépassent de la face antérieure dudit verre réfléchissant (12) d'au moins une largeur de diode électroluminescente (60).

4. Module de rétroviseur extérieur automobile selon la revendication 1, **caractérisé en ce que** ledit verre réfléchissant (11) est tendu entre un porte-verre réfléchissant (50) et un cadre du verre réfléchissant (51) qui est fixé sur celui-ci et qui entoure ledit verre réfléchissant (11) sur sa face antérieure (12).

5. Module de rétroviseur extérieur automobile selon la revendication 4, **caractérisé en ce que** ledit cadre de verre réfléchissant (51) présente un espace creux (58) circulaire le long du rebord du miroir (14).

6. Module de rétroviseur extérieur automobile selon la revendication 5, **caractérisé en ce que** les attaches (24) de ladite feuille chauffante (20) qui sont équipées de dispositifs lumineux (60) sont placées dans ledit espace creux (58) avec du jeu ou de manière parfaitement ajustée.

7. Module de rétroviseur extérieur automobile selon la revendication 1, **caractérisé en ce que** lesdites bandes conductrices de courant (31-33) sont placées du côté de la feuille chauffante (20) où se trouve également l'élément chauffant(30).

8. Module de rétroviseur extérieur automobile selon la revendication 1, **caractérisé en ce qu'**au moins une partie des bandes conductrices de courant (32) allant auxdits dispositifs lumineux (60) est un fil de résistance (37).

9. Module de rétroviseur extérieur automobile selon la revendication 1, **caractérisé en ce que** ledit dispositif lumineux (60) est une diode électroluminescente ou un groupe de diodes électroluminescentes englobé(e) par un élément conducteur de lumière (64) qui est indissociablement lié à ladite diode ou audit groupe de diodes.
